# EUROPEAN PATENT APPLICATION

(11) **EP 2 806 675 A1**
(43) Date of publication of application: **26.11.2014**
(21) Application number: 12865871.3
(22) Date of filing: 20.01.2012
(51) Int. Cl.: H04W 24/00

(54) **METHOD AND DEVICE FOR DETECTING RESUMPTION OF INTERRUPTED CELL**

(71) Applicant: Fujitsu Limited, Kawasaki-shi, Kanagawa 211-8588 (JP)
(72) Inventor: CHANG, Ningjuan, Beijing 100025 (CN); WANG, Weiwei, Beijing 100025 (CN); LU, Yanling, Beijing 100025 (CN); XU, Haibo, Beijing 100025 (CN)
(74) Representative: Lewin, David Nicholas
(86) International application number: PCT/CN2012/070649
(87) International publication number: WO 2013/107035

(57) **Abstract**

Embodiments of the present invention provide a method and apparatus for detecting recovery of an interrupted cell. The method includes: transmitting request access information to a coverage of an interrupted cell by a base station of the interrupted cell after performing a self-healing process, so that user equipment within the coverage accesses to the base station according to the request access information; counting, by the base station, whether there is user equipment succeeded in accessing within a predefined period of time, or counting whether the number of user equipments succeeded in accessing within a predefined period of time is greater than a predefined threshold value; and determining by the base station that the interrupted cell is recovered, if there is user equipment succeeded in accessing within the predefined period of time, or if the number of user equipments succeeded in accessing within the predefined period of time is greater than the predefined threshold value. With the method and apparatus of the embodiments of the present invention, the base station may determine whether an interrupted cell is recovered according to an access situation or a success rate of access of user equipment by transmitting a message including request access information, so as to guarantee subsequent operation of the interrupted cell.

## Description

### Technical Field

The present invention relates to the field of communications, and in particular to a method and apparatus for detecting recovery of an interrupted cell.

### Background Art

In the field of communications, interruption of a cell refers to that when the cell cannot maintain radio bearers of UE (user equipment) within its coverage, or can only maintain a limited number of radio bearers of the UE, or cannot accept newly-accessed UE, it can be deemed that the cell is in an interrupted state. In a serious case, the cell cannot provide any radio service to the UE within its coverage.

Currently, if a cell in an interrupted state (hereinafter referred to as an interrupted cell) has a function of self-healing, the function may be started to perform detection of interrupted sate of the cell and cell recovery, so as to alleviate or eliminate the interrupted sate of the cell.

However, when the cell in the interrupted state executes the function of self-healing, if there is no user in an idle state accesses to the cell or there is no user accesses to the cell by handover, the cell cannot determine whether the self-healing process succeeds and whether the existed interrupted state is recovered, and such an issue is even more obvious when the number of UEs within the coverage of the cell is relatively small and the activity of the UEs is relatively low.

It should be noted that the above description of the background art is merely provided for clear and complete explanation of the present invention and for easy understanding by those skilled in the art. And it should not be understood that the above technical solution is known to those skilled in the art as it is described in the background art of the present invention.

### Summary of the Invention

An object of the embodiments of the present invention is to provide a method and apparatus for detecting recovery of an interrupted cell, so as to detect whether a cell in an interrupted state is recovered.

According to a first aspect of the embodiments of the present invention, there is provided a method for detecting recovery of an interrupted cell, including:
transmitting request access information to a coverage of an interrupted cell by a base station of the interrupted cell after performing a self-healing process, so that user equipment within the coverage accesses to the base station according to the request access information;
counting, by the base station, whether there is user equipment succeeded in accessing within a predefined period of time, or counting whether the number of user equipments succeeded in accessing within a predefined period of time is greater than a predefined threshold value; and
determining by the base station that the interrupted cell is recovered, if there is user equipment succeeded in accessing within the predefined period of time, or if the number of user equipments succeeded in accessing within the predefined period of time is greater than the predefined threshold value.

According to a second aspect of the embodiments of the present invention, there is provided a method for detecting recovery of an interrupted cell, including:
receiving a cell system message or a broadcast message by user equipment of an interrupted cell;
determining, by the user equipment, whether or not to access to the interrupted cell, according to request access information, if the cell system message or the broadcast message includes the request access information; and
initiating an RRC connection establishment process by the user equipment to a base station of the interrupted cell, if the user equipment determines to access to the interrupted cell, so that the base station of the interrupted cell counts whether there is user equipment succeeded in accessing within a predefined period of time, or counts whether the number of user equipments succeeded in accessing within a predefined period of time is greater than a predefined threshold, and determines whether or not the interrupted cell is recovered based on a counting result.

According to a third aspect of the embodiments of the present invention, there is provided a base station, including:
a transmitting unit configured to transmit request access information to a coverage of the base station after the base station performs a self-healing process, so that user equipment within the coverage accesses to the base station according to the request access information;
a counting unit configured to count whether there is user equipment succeeded in accessing within a predefined period of time, or count whether the number of user equipments succeeded in accessing within a predefined period of time is greater than a predefined threshold, after the transmitting unit transmits the request access information; and
a determining unit configured to determine that a interrupted cell where the base station is present is recovered, when a counting result of the counting unit is that there is user equipment succeeded in accessing within the predefined period of time, or the number of user equipments succeeded in accessing within the predefined period of time is greater than the predefined threshold.

According to a fourth aspect of the embodiments of the present invention, there is provided user equipment, including:
a receiving unit configured to receive a cell system message or a broadcast message transmitted by a base station of an interrupted cell;
a first judging unit configured to judge whether the cell system message or the broadcast message includes request access information;
a second judging unit configured to determine whether or not to access to the interrupted cell according to the request access information, when a judgment result of the first judging unit is yes; and
an accessing unit configured to initiate an RRC connection establishment process to the base station of the interrupted cell, when a judgment result of the second judging unit is yes, so that the base station of the interrupted cell counts whether there is user equipment succeeded in accessing within a predefined period of time, or counts whether the number of user equipments succeeded in accessing within a predefined period of time is greater than a predefined threshold, and determines whether or not the interrupted cell is recovered based on a counting result.

According to a fifth aspect of the embodiments of the present invention, there is provided a computer-readable program, wherein when the program is executed in a base station, the program enables a computer to carry out the method for detecting recovery of an interrupted cell as described in the first aspect in the base station.

According to a sixth aspect of the embodiments of the present invention, there is provided a storage medium in which a computer-readable program is stored, wherein the computer-readable program enables a computer to carry out the method for detecting recovery of an interrupted cell as described in the first aspect in a base station.

According to a seventh aspect of the embodiments of the present invention, there is provided a computer-readable program, wherein when the program is executed in user equipment, the program enables a computer to carry out the method for detecting recovery of an interrupted cell as described in the second aspect in the user equipment.

According to an eighth aspect of the embodiments of the present invention, there is provided a storage medium in which a computer-readable program is stored, wherein the computer-readable program enables a computer to carry out the method for detecting recovery of an interrupted cell as described in the second aspect in user equipment.

An advantage of the embodiments of the present invention resides in that the base station of an interrupted cell transmits a message including request access information after performing self-healing to make user equipment within its coverage to access to the base station, and determines whether the interrupted cell is recovered according to an access situation or a success rate of access, so as to make the interrupted cell to be recovered to a normal operational state as quick as possible, and guarantee subsequent operation of the interrupted cell.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment. In the drawings:
Figure 1 is a flowchart of a method for detecting recovery of an interrupted cell of an embodiment of the present invention;
Figure 2 is a flowchart of a method for detecting recovery of an interrupted cell of another embodiment of the present invention;
Figure 3 is a schematic diagram of a procedure of information interaction between UE and an eNB;
Figure 4 is a schematic diagram of a procedure of processing of the UE and the eNB;
Figure 5 is a schematic diagram of the structure of a base station of an embodiment of the present invention; and
Figure 6 is a schematic diagram of the structure of UE of an embodiment of the present invention.

### Detailed Description of the Invention

Foregoing and other features of the embodiments of the present invention will become apparent with reference to the drawings and the following description. These embodiments are illustrative only and are not intended to limit the present invention. For easy understanding of the principle and embodiments of the present invention by those skilled in the art, a cell in an interrupted state shall be referred to as an interrupted cell in the following description. A function executed by a cell refers to a function executed by a base station of the cell, unless otherwise specified. Wherein, the concepts of the cell and the base station of the cell are known in the art, and are not limited to the cell and eNB described in the embodiments below, which shall not be described herein any further.

### Embodiment 1

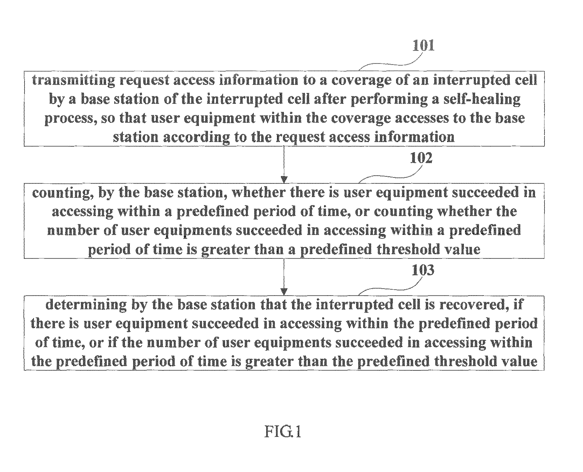

An embodiment of the present invention provides a method for detecting recovery of an interrupted cell. Fig. 1 is a flowchart of the method. As shown in Fig. 1, the method includes:
step 101: transmitting request access information to a coverage of an interrupted cell by a base station of the interrupted cell after performing a self-healing process, so that user equipment within the coverage accesses to the base station according to the request access information;
step 102: counting, by the base station, whether there is user equipment succeeded in accessing within a predefined period of time, or counting whether the number of user equipments succeeded in accessing within a predefined period of time is greater than a predefined threshold value; and
step 103: determining by the base station that the interrupted cell is recovered, if there is user equipment succeeded in accessing within the predefined period of time, or if the number of user equipments succeeded in accessing within the predefined period of time is greater than the predefined threshold value.

In step 101, the request access information may be included in a system message and is transmitted via the system message, and it also be included in a broadcast message and is transmitted via the broadcast message, and this embodiment is not limited thereto. If the request access information is included in the system message, it may be included in a master information block of the system message, and may also be included in a first system information block, a second system information block, or another system information block, of the system message.

In step 101, the request access information may include a request access indication only, or may include a request access probability only, or may include both a request access indication and a request access probability. UE (user equipment) receiving the request access information determines whether to access to the interrupted cell according to a detailed content of the request access information. If the UE determines to access to the interrupted cell according to the request access information, the UE initiates an RRC connection establishment process to a base station of the interrupted cell, with subsequent procedures being identical to those in the prior art, which shall not be described herein any further. And if the UE determines not to access to the interrupted cell according to the request access information, it keeps its original state, and this embodiment is not limited thereto. Wherein, in detail, a method for determining whether to access to the interrupted cell by the UE shall be described in an embodiment below.

Wherein, if the request access information includes a request access indication only, presence attribute of its information element is optional, and its type may be enumerated, such as {true}, indicating that the UE receiving the request access indication may initiate an RRC connection establishment process; and its type may also be Boolean, such as 0 or 1, indicating that the UE receiving the request access indication determines whether to request to establish a user plane channel in initiating the RRC connection establishment process according to the request access indication being 0 or 1. For example, if the received request access indication is 0, the UE initiates the RRC connection establishment process only, without needing to request to establish a user plane channel, and if the received request access indication is 1, the UE needs not only to initiate the RRC connection establishment process, but also to request to a network side for recovering a carried radio user plane channel in an activated state. And the base station may accordingly count the number of UEs succeeded in access. For example, if the request access indication transmitted by the base station is 1, and the UE receiving the indication finishes only the RRC connection establishment, but not recovers a traffic-carried radio user plane channel in an activated state, the base station deems that the UE does not succeed in accessing.

Wherein, if the request access information includes both a request access indication and a request access probability, the attribute and meaning of the request access indication are identical to those described above, and the attribute of the request access probability is optional, and its type may be enumerated, such as 1/10, 1/5, 3/10, and 1, etc.

Wherein, if the request access indication includes only a request access probability, the attribute of the request access probability is optional, and its type may be enumerated, such as 1/10, 1/5, 3/10, and 1, etc.

In step 101, in order that the UE accesses to the base station smoothly, the base station may transmit downlink physical information, such as a cell reference signal, a synchronization signal, and a physical dedicated control channel, etc., and an existing scheme may be employed for a detailed transmission method and transmission time, which shall not be described herein any further.

In step 102, as the base station has performed self-healing, it is possible that the interrupted cell is successfully recovered, or not recovered. Part or all of the UEs are made to access to the interrupted cell in step 101, and the base station may determine whether the interrupted cell is recovered by counting the number of user equipments succeeded in accessing within a predefined period of time.

In step 102, the method of counting the number of user equipments succeeded in accessing may be carried out by the prior art, and this embodiment is not limited thereto. In an embodiment, when the UE initiates the RRC connection establishment process to the base station, the base station finishes the RRC connection with the UE, and it deems that the UE succeeds in accessing, and adds 1 to the number of user equipments succeeded in accessing. In another embodiment, when the UE initiates the RRC connection establishment process to the base station, the base station deems that the UE succeeds in accessing after finishing RRC connection with the UE and waiting for that the UE finishes other traffic-carried connection, and adds 1 to the number of user equipments succeeded in accessing. A detailed counting method and policy may be determined by the base station.

In step 102, the predefined period of time and the predefined threshold value may be configured by a network management system of the base station for the base station, and also be generated by the base station itself, and this embodiment is not limited thereto.

In step 103, in an embodiment, the base station counts only whether there is user equipment succeeded in accessing within a predefined period of time, and if the counting result is yes, the base station deems that the interrupted cell is successfully recovered. In another embodiment, the base station counts whether the number of user equipments succeeded in accessing within a predefined period of time is greater than a predefined threshold value, and if a counting result is yes, the base station deems that the interrupted cell is successfully recovered.

The above two manners are exemplary only, and this embodiment is not limited thereto. For example, the base station may determine whether the interrupted cell is successfully recovered according to the counting result in step 102 by using other policies.

In this embodiment, if the base station determines that the interrupted cell is successfully recovered by judgment, the base station stops transmitting the request access information. Otherwise, if the base station determines that the interrupted cell is not successfully recovered by judgment, the base station may trigger release of the RRC connection of the UE succeeded in accessing, enter into the self-healing state again, and carry out the method of the embodiment of the present invention to determine whether the interrupted cell is recovered.

With the detecting method of this embodiment, the eNB of the interrupted cell transmits a message including request access information after performing self-healing to make UE/UEs within its coverage to access to the eNB, and determines whether the interrupted cell is recovered according to an access situation or a success rate of access, so as to provide services to the UE/UEs within its coverage in time.

### Embodiment 2

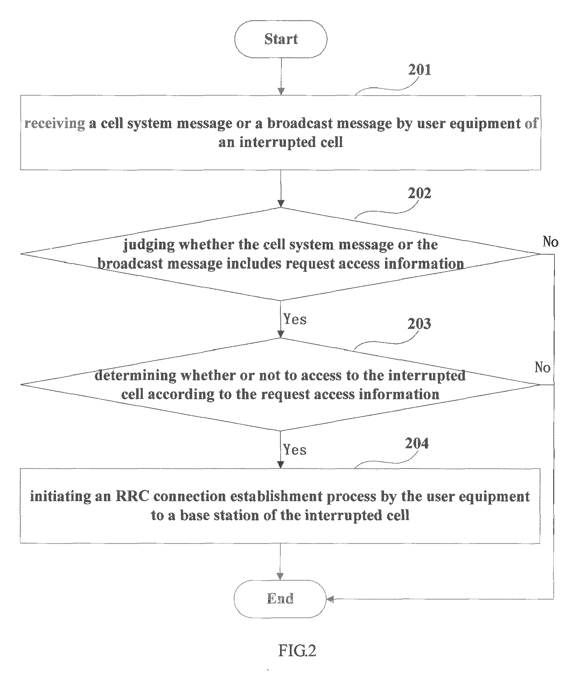

An embodiment of the present invention further provides a method for detecting recovery of an interrupted cell. Fig. 2 is a flowchart of the method. As shown in Fig. 2, the method includes:
step 201: receiving a cell system message or a broadcast message by user equipment of an interrupted cell;
step 202: judging whether the cell system message or the broadcast message includes request access information, and executing step 203 if yes; otherwise, ending the step;
step 203: determining whether or not to access to the interrupted cell according to the request access information, and executing step 204 if yes; otherwise, ending the step;
step 204: initiating an RRC connection establishment process by the user equipment to a base station of the interrupted cell, so that the base station of the interrupted cell counts whether there is user equipment succeeded in accessing within a predefined period of time, or counts whether the number of user equipments succeeded in accessing within a predefined period of time is greater than a predefined threshold, and determines whether or not the interrupted cell is recovered based on a counting result.

The method of this embodiment is the processing of the UE side, which corresponding to the processing of the base station side in Embodiment 1. When receiving the cell system message or the broadcast message transmitted by the base station, the UE determines whether to access to the base station according to a request access indication included in the message. If the interrupted cell is recovered, the UE may smoothly access to the base station. Accordingly, the base station may determine whether the interrupted cell is recovered by counting whether there is user equipment succeeded in accessing within a predefined period of time, or counting whether the number of user equipments succeeded in accessing within a predefined period of time is greater than a predefined threshold

In step 201, if the UE in the coverage of the interrupted cell desires to camp in the interrupted cell via a cell selection/reselection process, it will first read the system message or the broadcast message of the cell, and judge whether the received system message or broadcast message of the cell carries the request access information. Wherein, the attribute, type, etc., of the request access information is explained in Embodiment 1, which shall not be described herein any further.

In step 202, if the received system message includes the request access information, the UE determines whether to initiate an RRC connection establishment process according to the request access information, or according to the request access information and other policies. Wherein, in an embodiment, the UE may initiate the RRC connection establishment process by triggering a position area updating procedure. And in another embodiment, the UE may initiate the RRC connection establishment process by triggering a service request procedure. The detailed establishment process is identical to the prior art, which shall not be described herein any further.

As contents included in the request access information are different, it is also different for the UE in judging whether to initiate the RRC connection establishment process, which shall be described below by way of examples.

In an embodiment, if the request access information received by the UE includes only a request access indication, in a mode of implementation, the UE may initiate the RRC connection establishment process directly to the interrupted cell, and in another mode of implementation, the UE determines whether to initiate the RRC connection establishment process according to a predefined probability. For example, if the predefined probability of the UE is 1/2, the UE randomly selects a value from {0,1}; if "1" is selected, the UE initiates the RRC connection establishment process to the interrupted cell; and if "0" is selected, the UE neglects the request access information.

Wherein, when the UE triggers the RRC connection establishment process via a position area updating procedure, if the request access indication is "1", the UE sets an active flag in a position area updating request message as 1; and if the request access indication is "0", the UE sets the active flag in the position area updating request message as 0, so that the network side determines whether to recover the traffic-carried radio user plane channel when the UE is in an activated state according to the setting of the active flag.

In another embodiment, if the request access information received by the UE includes both a request access indication and a request access probability, in a mode of implementation, the UE determines whether to initiate the RRC connection establishment process according to the request access probability. For example, if the request access probability is 1/5, the UE randomly selects an integer from 1∼5; if "1" is selected, the UE initiates the RRC connection establishment process to the interrupted cell; and if the selected value is not 1, the UE neglects the received request access information.

Wherein, when the UE triggers the RRC connection establishment process via a position area updating procedure, if the request access indication is "1", the UE sets an active flag in a position area updating request message as 1; and if the request access indication is "0", the UE sets the active flag in the position area updating request message as 0, so that the network side determines whether to recover the traffic-carried radio user plane channel when the UE is in an activated state according to the setting of the active flag.

In still another embodiment, if the request access information received by the UE includes only a request access probability, in a mode of implementation, the UE determines whether to initiate the RRC connection establishment process according to the request access probability. For example, if the request access probability is 1/5, the UE randomly selects an integer from 1∼5; if "1" is selected, the UE initiates the RRC connection establishment process to the cell; and if the selected value is not 1, the UE neglects the received request access information.

In this embodiment, if the cell system message or the broadcast message received by the UE includes no request access information, the UE still camps in an idle state according to an existing mechanism.

With the detecting method of this embodiment, the UE in the coverage of the interrupted cell determines whether to access to the base station according to the received request access indication, and assists the base station having finished self-healing to count an access situation or a success rate of access of the UE, so that the base station determines whether the interrupted cell is recovered according to the access situation or the success rate of access, so as to provide services to the UE within its coverage in time.

For the methods in embodiments 1 and 2 to be more clear and easy to be understood, embodiments of the present invention shall be described below in conjunction with a procedure of information interaction and a procedure of processing between the UE and the base station.

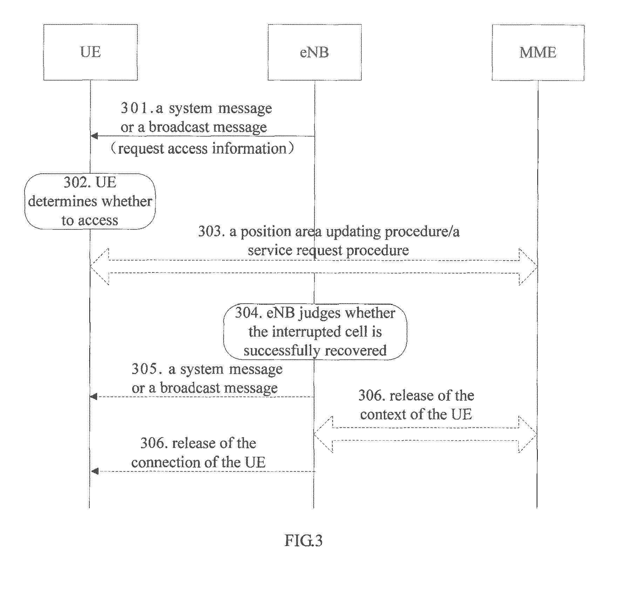

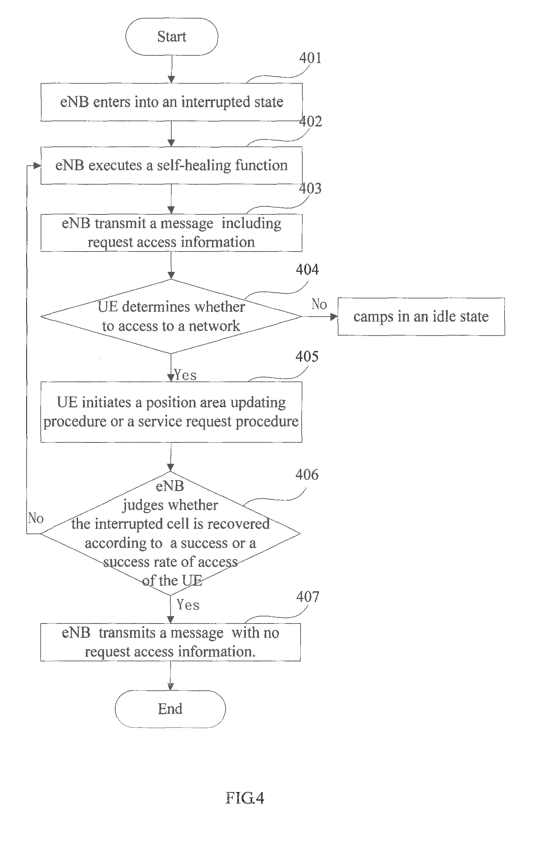

Fig. 3 is a schematic diagram of a procedure of information interaction between UE and a base station, and Fig. 4 is a schematic diagram of a procedure of processing of the UE and the base station.

Referring to Fig. 3, the procedure of information interaction includes:
step 301: an eNB of an interrupted cell transmit a system message or a broadcast message to its coverage after performing self-healing, wherein, request access information is included in the system message or the broadcast message;
step 302: the UE receiving the system message or broadcast message determines whether to access to the eNB according to the request access information;
step 303: if the UE determines to access to the eNB, it initiate an RRC connection establishment process via a position area updating procedure;
in this step, the UE may also initiate the RRC connection establishment process via a service request procedure;
step 304: the eNB judges whether the interrupted cell is successfully recovered by counting an access situation of the UE or a success rate of access of the UE in a period of time; and executes step 305 if it is recovered; otherwise, executes step 306;
step 305: the eNB terminates carrying the request access information in the transmitted system message or broadcast message; and
step 306: the eNB triggers release of the RRC connection of the UE succeeded in accessing.

Referring to Fig. 4, the procedure of processing includes:
step 401: a cell of an eNB enters into an interrupted state;
step 402: the eNB executes a self-healing function;
step 403: the eNB transmit a system message or a broadcast message including request access information;
step 404: the UE determines whether to access to a network (that is, accessing to the eNB or accessing to the cell); and executes step 405 if yes; otherwise, camps in an idle state;
step 405: the UE initiates a position area updating procedure;
   in this step, the UE may also initiate a service request procedure;
step 406: the eNB judges whether the interrupted cell is successfully recovered according to access success (or a success rate of access) of the UE; and executes step 407 if yes; otherwise, turns back to step 402; and
step 407: the eNB starts to transmit a system message or a broadcast message with no request access information.

In the description above, particular modes of implementation are taken as examples. However, the embodiments of the present invention are not limited thereto, and execution of the steps is not limited to what is described below, and follows the modes of implementation described in embodiments 1 and 2.

An embodiment of the present invention further provides a base station, as described in Embodiment 3 below. As the principle of the base station for solving problem is similar to that of the method in Embodiment 1, the implementation of the method may be referred to for the implementation of the base station, and the repeated parts shall not be described any further.

### Embodiment 3

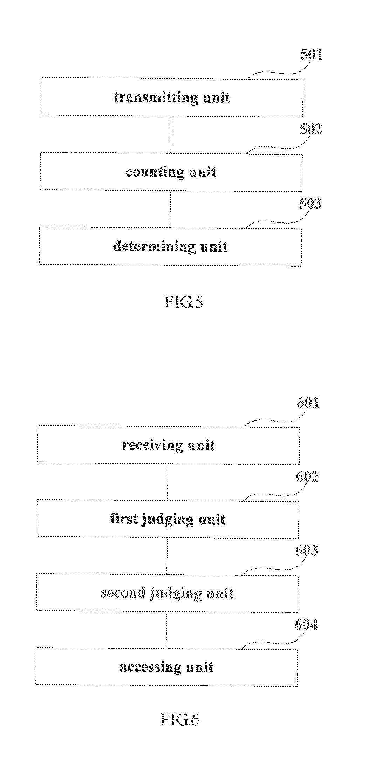

An embodiment of the present invention further provides a base station. Fig. 5 is a schematic diagram of the structure of the base station. Referring to Fig. 5, the base station includes:
a transmitting unit 501 configured to transmit request access information to a coverage of the base station after the base station performs a self-healing process, so that user equipment within the coverage accesses to the base station according to the request access information;
a counting unit 502 configured to count whether there is user equipment succeeded in accessing within a predefined period of time, or count whether the number of user equipments succeeded in accessing within a predefined period of time is greater than a predefined threshold, after the transmitting unit 501 transmits the request access information; and
a determining unit 503 configured to determine that a interrupted cell where the base station is present is recovered, when a counting result of the counting unit 502 is that there is user equipment succeeded in accessing within the predefined period of time, or the number of user equipments succeeded in accessing within the predefined period of time is greater than the predefined threshold.

In the embodiment of the present invention, the request access information may be included in a system message transmitted by the base station, or included in a broadcast message transmitted by the base station.

In the embodiment of the present invention, the request access information includes a request access indication and/or a request access probability, so that the user equipment within the coverage determines whether or not to access to the base station according to the request access indication and/or the request access probability.

The base station of this embodiment transmits a message including request access information after entering into an interrupted state and performing a self-healing, making the UE within its coverage to access to the eNB, and to determine whether the interrupted cell is recovered according to a access situation or a success rate of access, so as to provide services to the UE within its coverage in time.

An embodiment of the present invention further provides UE, as described in Embodiment 4 below. As the principle of the UE for solving problem is similar to that of the method in Embodiment 2, the implementation of the method may be referred to for the implementation of the UE, and the repeated parts shall not be described any further.

### Embodiment 4

An embodiment of the present invention further provides UE. Fig. 6 is a schematic diagram of the structure of the UE. Referring to Fig. 6, the UE includes:
a receiving unit 601 configured to receive a cell system message or a broadcast message transmitted by a base station of an interrupted cell;
a first judging unit 602 configured to judge whether the cell system message or the broadcast message includes request access information;
a second judging unit 603 configured to determine whether or not to access to the interrupted cell according to the request access information, when a judgment result of the first judging unit 602 is yes; and
an accessing unit 604 configured to initiate an RRC connection establishment process to the base station of the interrupted cell, when a judgment result of the second judging unit 603 is yes, so that the base station of the interrupted cell counts whether there is user equipment succeeded in accessing within a predefined period of time, or counts whether the number of user equipments succeeded in accessing within a predefined period of time is greater than a predefined threshold, and determines whether or not the interrupted cell is recovered based on a counting result.

In the embodiment of the present invention, the request access information includes a request access indication and/or a request access probability. Wherein,
if the request access information includes only the request access indication, the second judging unit 603 determines to access to the interrupted cell, or the second judging unit 603 determines whether or not to access to the interrupted cell according to a predefined probability;
if the request access information includes the request access indication and the request access probability, the second judging unit 603 determines whether or not to access to the interrupted cell according to the request access probability; and if the request access information includes only the request access probability, the second judging unit 603 determines whether or not to access to the interrupted cell according to the request access probability.

In the embodiment of the present invention, the accessing unit 604 initiates the RRC connection establishment process to the base station of the interrupted cell by triggering a position area updating procedure or a service request procedure.

The UE of this embodiment determines whether to access to the base station of the interrupted cell according to the received request access indication, and assists the base station having finished self-healing to count a access situation or a success rate of access of the UE, so that the base station determines whether the interrupted cell is recovered according to the access situation or the success rate of access, so as to provide services to the UE within its coverage in time.

An embodiment of the present invention further provides a computer-readable program, wherein when the program is executed in a base station, the program enables a computer to carry out the method for detecting recovery of an interrupted cell as described in Embodiment 1 in the base station.

An embodiment of the present invention further provides a storage medium in which a computer-readable program is stored, wherein the computer-readable program enables a computer to carry out the method for detecting recovery of an interrupted cell as described in Embodiment 1 in a base station.

An embodiment of the present invention further provides a computer-readable program, wherein when the program is executed in user equipment, the program enables a computer to carry out the method for detecting recovery of an interrupted cell as described in Embodiment 2 in the user equipment.

An embodiment of the present invention further provides a storage medium in which a computer-readable program is stored, wherein the computer-readable program enables a computer to carry out the method for detecting recovery of an interrupted cell as described in Embodiment 2 in user equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A method for detecting recovery of an interrupted cell, comprising:
transmitting request access information to a coverage of an interrupted cell by a base station of the interrupted cell after performing a self-healing process, so that user equipment within the coverage accesses to the base station according to the request access information;
counting, by the base station, whether there is user equipment succeeded in accessing within a predefined period of time, or counting whether the number of user equipments succeeded in accessing within a predefined period of time is greater than a predefined threshold value; and
determining by the base station that the interrupted cell is recovered, if there is user equipment succeeded in accessing within the predefined period of time, or if the number of user equipments succeeded in accessing within the predefined period of time is greater than the predefined threshold value.

2. The method according to claim 1, wherein the request access information is included in a system message, or is included in a broadcast message.

3. The method according to claim 1, wherein the request access information includes a request access indication and/or a request access probability, so that the user equipment within the coverage determines whether or not to access to the base station according to the request access indication and/or the request access probability.

4. A method for detecting recovery of an interrupted cell, comprising:
receiving a cell system message or a broadcast message by user equipment of an interrupted cell;
determining, by the user equipment, whether or not to access to the interrupted cell, according to request access information, if the cell system message or the broadcast message includes the request access information; and
initiating an Radio Resource Control (RRC) connection establishment process by the user equipment to a base station of the interrupted cell, if the user equipment determines to access to the interrupted cell, so that the base station of the interrupted cell counts whether there is user equipment succeeded in accessing within a predefined period of time, or counts whether the number of user equipments succeeded in accessing within a predefined period of time is greater than a predefined threshold, and determines whether or not the interrupted cell is recovered based on a counting result.

5. The method according to claim 4, wherein the request access information includes a request access indication and/or a request access probability.

6. The method according to claim 5, wherein,
if the request access information includes only the request access indication, the user equipment determines to access to the interrupted cell, or the user equipment determines whether or not to access to the interrupted cell according to a predefined probability;
if the request access information includes the request access indication and the request access probability, the user equipment determines whether or not to access to the interrupted cell according to the request access probability; and
if the request access information includes only the request access probability, the user equipment determines whether or not to access to the interrupted cell according to the request access probability.

7. The method according to claim 4, wherein,
the user equipment initiates the RRC connection establishment process to the base station of the interrupted cell by triggering a position area updating procedure or a service request procedure.

8. A base station, comprising:
a transmitting unit configured to transmit request access information to a coverage of the base station after the base station performs a self-healing process, so that user equipment within the coverage accesses to the base station according to the request access information;
a counting unit configured to count whether there is user equipment succeeded in accessing within a predefined period of time, or count whether the number of user equipments succeeded in accessing within a predefined period of time is greater than a predefined threshold, after the transmitting unit transmits the request access information; and
a determining unit configured to determine that a interrupted cell where the base station is present is recovered, when a counting result of the counting unit is that there is user equipment succeeded in accessing within the predefined period of time, or the number of user equipments succeeded in accessing within the predefined period of time is greater than the predefined threshold.

9. The base station according to claim 8, wherein the request access information is included in a system message transmitted by the base station, or included in a broadcast message transmitted by the base station.

10. The base station according to claim 8, wherein the request access information includes a request access indication and/or a request access probability, so that the user equipment within the coverage determines whether or not to access to the base station according to the request access indication and/or the request access probability.

11. User equipment, comprising:
a receiving unit configured to receive a cell system message or a broadcast message transmitted by a base station of an interrupted cell;
a first judging unit configured to judge whether the cell system message or the broadcast message includes request access information;
a second judging unit configured to determine whether or not to access to the interrupted cell according to the request access information, when a judgment result of the first judging unit is yes; and
an accessing unit configured to initiate an RRC connection establishment process to the base station of the interrupted cell, when a judgment result of the second judging unit is yes, so that the base station of the interrupted cell counts whether there is user equipment succeeded in accessing within a predefined period of time, or counts whether the number of user equipments succeeded in accessing within a predefined period of time is greater than a predefined threshold, and determines whether or not the interrupted cell is recovered based on a counting result.

12. The user equipment according to claim 11, wherein the request access information includes a request access indication and/or a request access probability, and wherein,
if the request access information includes only the request access indication, the second judging unit determines to access to the interrupted cell, or the second judging unit determines whether or not to access to the interrupted cell according to a predefined probability;
if the request access information includes the request access indication and the request access probability, the second judging unit determines whether or not to access to the interrupted cell according to the request access probability; and
if the request access information includes only the request access probability, the second judging unit determines whether or not to access to the interrupted cell according to the request access probability.

13. The user equipment according to claim 11, wherein,
the accessing unit initiates the RRC connection establishment process to the base station of the interrupted cell by triggering a position area updating procedure or a service request procedure.

14. A computer-readable program, wherein when the program is executed in a base station, the program enables a computer to carry out the method for detecting recovery of an interrupted cell as claimed in any one of claims 1-3 in the base station.

15. A storage medium in which a computer-readable program is stored, wherein the computer-readable program enables a computer to carry out the method for detecting recovery of an interrupted cell as claimed in any one of claims 1-3 in a base station.

16. A computer-readable program, wherein when the program is executed in user equipment, the program enables a computer to carry out the method for detecting recovery of an interrupted cell as claimed in any one of claims 4-7 in the user equipment.

17. A storage medium in which a computer-readable program is stored, wherein the computer-readable program enables a computer to carry out the method for detecting recovery of an interrupted cell as claimed in any one of claims 4-7 in user equipment.
